# EUROPÄISCHE PATENTSCHRIFT

(11) **EP 2 653 409 B1**
(45) Veröffentlichungstag und Bekanntmachung des Hinweises auf die Patenterteilung: **17.12.2014**
(21) Anmeldenummer: 13163278.8
(22) Anmeldetag: 11.04.2013
(51) Int. Cl.: B65G 1/08

(54) **Verfahren und Vorrichtung zur Sortierung von Gütern, insbesondere Getränkekisten**
Method and device for sorting goods, in particular beverage crates
Procédé et dispositif pour trier des marchandises, en particulier des caisses à boissons

(30) Priorität: 11.04.2012 AT 501262012
(43) Veröffentlichungstag der Anmeldung: 23.10.2013
(73) Patentinhaber: KNAPP Systemintegration GmbH, 8700 Leoben (AT)
(72) Erfinder: Zwing, Siegfried, 8784 Trieben (AT); Brauneis, Christian, 8661 Wartberg im Mürztal (AT)
(74) Vertreter: Wirnsberger, Gernot

(56) Entgegenhaltungen:
- EP-A1- 1 842 803
- EP-A2- 0 991 037
- DE-A1- 19 714 455
- DE-C1- 19 635 032
- DE-U1- 9 315 118
- US-A- 3 458 023
- US-A- 3 750 804
- US-A- 5 513 936

## Beschreibung

Die Erfindung betrifft ein Verfahren zur Sortierung von Gütern, insbesondere Getränkekisten, wobei zu sortierende Güter teilweise automatisch und teilweise semiautomatisch sowie optional manuell sortiert werden und wobei eine Zuordnung der Güter zu einer bestimmten Sortierung nach einem Kriterium wie deren Häufigkeit durchgeführt wird.

Des Weiteren betrifft die Erfindung eine Vorrichtung zur Sortierung von Gütern, insbesondere eine teilautomatisierte Leergutsortieranlage für Getränkekisten, wobei zu sortierende Güter teilweise automatisch und teilweise semiautomatisch sowie optional manuell sortierbar sind und wobei eine Zuordnung der Güter zu einer bestimmten Sortierung nach einem Kriterium wie deren Häufigkeit erfolgt.

Eine Vielzahl von Getränken, die im Lebensmittelbereich vertrieben werden, ist in Mehrwegflaschen abgefüllt, die wiederholt Verwendung finden. Die Mehrwegflaschen werden üblicherweise in Mehrwegbehältern bzw. wiederverwendbaren Getränkekisten angeliefert und vertrieben. Die Getränkekisten sind in der Regel oftmalig wiederverwendbar.

Die wiederverwendbaren Getränkekisten, die mit Mehrwegflaschen befüllt sind, werden beispielsweise in Supermärkten verkauft und bei diesen vom Konsumenten wieder abgegeben, um bezahltes Pfand zurückzuerhalten. Bei den Supermärkten oder anderen Vertriebsstellen sammeln sich daher mit leeren Flaschen befüllte Getränkekisten, die in der Regel unabhängig vom Hersteller auf Paletten gepackt werden. Damit jedoch die einzelnen Getränkekisten, die sich von Hersteller zu Hersteller unterscheiden, an den Hersteller zur weiteren Verwendung und Wiederbefüllung retourniert werden können, müssen die Getränkekisten sortenrein getrennt werden. Getränkekisten und Flaschen anderer Hersteller sind für einen bestimmten Hersteller nicht verwendbar.

Da eine sortenreine Auftrennung von Getränkekisten vor Ort bzw. in einem Supermarkt arbeits- und zeitintensiv ist, sind insbesondere größere Supermarktketten dazu übergegangen, die Getränkekisten von den einzelnen Supermärkten einem Sortierzentrum zuzuführen, in welchem die erforderliche sortenreine Auftrennung von Getränkekisten erfolgt. Nach der Auftrennung werden die Getränkekisten auf Transportmittel wie Rollbehälter oder Paletten gestapelt, dem jeweiligen Hersteller retourniert und so in dessen Produktionskreislauf rückgeführt. Bislang bekannte Sortieranlagen und mit denen betriebene Verfahren sind durchaus geeignet, am Ende der Sortierung sortenreine Paletten mit Getränkekisten bereitzustellen. Nachteilig dabei ist allerdings, wie in der EP 2 275 363 A2 dargestellt, dass nur eine begrenzte Anzahl verschiedener Getränkekisten handhabbar ist, weil sonst in der Vorrichtung bzw. verfahrensmäßig viele Abzweigungen und Transportbahnen erforderlich sind, was zu einem unakzeptabel hohen Raumbedarf führt.

In der erwähnten EP 2 275 363 A2 wird zur Behebung des angesprochenen Problems eines großen Platzbedarfes vorgeschlagen, unterschiedliche Güter bzw. Getränkekisten nach Identifikation in einem automatischen Lager mit einer Vielzahl von Lagerplätzen zu lagern, wobei jeder Lagerplatz einem bestimmten Gut zugeordnet ist. Zutreffend ist, dass dadurch weniger Transportbahnen erforderlich sind, was vordergründig einen geringeren Platzbedarf erfordert. Allerdings ist nicht berücksichtigt, dass bei Getränkekisten A-, Bund C-Läufer vorhanden sind. Insbesondere bei den selten vorkommenden bzw. langsamdrehenden C-Läufern sind prozentual verhältnismäßig wenige Getränkekisten zu manövrieren und zu lagern, es ist jedoch auch für diese langsamdrehenden Artikel jeweils ein Lagerplatz vorzusehen. Dies führt dazu, dass trotz der Vereinfachung der Transportwege ein Platzbedarf enorm ist. Zudem bleibt bei den langsamdrehenden C-Läufern das vorhandene Platzangebot den größten Teil der Zeit ungenutzt, was zumindest teilweise auch für B-Läufer zutrifft.

Aufgabe der Erfindung ist es, ein Verfahren der eingangs genannten Art anzugeben, das eine effiziente sortenreine Auftrennung von Gütern wie Getränkekisten bei geringem Platzangebot erlaubt.

Eine weitere Aufgabe der Erfindung ist es, eine Vorrichtung zur Durchführung eines derartigen Verfahrens anzugeben.

Die verfahrensmäßige Aufgabe wird gelöst, wenn bei einem Verfahren der eingangs genannten Art bei der semiautomatischen Sortierung die Güter manuell auf zumindest eine Pufferstrecke aufgegeben werden, die eine vorgegebene Länge aufweist, und bei Erreichen eines vorbestimmten Befüllungsgrades die Güter mit zumindest einer Einrichtung automatisch von der Pufferstrecke abgenommen werden.

Bei einem erfindungsgemäßen Verfahren ist die gewählte Vorgehensweise bei der semiautomatischen Sortierung ein großer Vorteil und führt zu einem geringen Platzbedarf. Schnelldrehende Getränkekisten bzw. A-Läufer werden von einer Identifikationseinrichtung erkannt und über eigene Transportbahnen abgetrennt und können sogleich auf Paletten sortenrein palettiert werden. Langsamer drehende Artikel werden ebenfalls von der Identifikationseinrichtung erfasst und semiautomatisch sortiert. Nicht zwingend, aber optional auch vorgesehen sein kann, dass besonders langsam drehende Artikel auch manuell sortiert werden. Güter, welche der semiautomatischen Sortierung zugeführt werden, werden dort manuell auf zumindest eine Pufferstrecke aufgegeben. Auf der Pufferstrecke verharren die auf dieser aufgegebenen Güter, bis ein vorbestimmter Befüllungsgrad erreicht ist. Dieser Befüllungsgrad kann beispielsweise so gewählt werden, dass exakt dann beladen wird, wenn mit den auf der Pufferstrecke vorhandenen Gütern wie Getränkekisten eine Palette vollständig befüllbar ist. Insbesondere erübrigt sich dadurch eine länger dauernde Lagerung der Güter beispielsweise in einem Hochlager, was mit zusätzlichem Arbeitsaufwand für das Be- bzw. Entladen des Hochlagers verbunden wäre. Ist der vorbestimmte Befüllungsgrad gegeben, werden die auf der Pufferstrecke befindlichen Güter automatisch mit der vorgesehenen Einrichtung von der Pufferstrecke abgenommen. Somit ergibt sich, dass häufig vorkommende Güter, beispielsweise Getränkekisten umsatzstarker Produkte, automatisiert sortenrein getrennt werden, wobei der Platzbedarf hierfür aufgrund der hohen Stückzahlen und dichten Packung auf den Transportbändern gerechtfertigt ist. Seltener vorkommende Güter, insbesondere Getränkekisten, werden auf der zumindest einen Pufferstrecke mit geringem Platzbedarf quasi zwischengespeichert und abgezogen, sobald ein vorgegebener Befüllungsgrad erreicht ist. Wenn eine manuelle Sortierung zusätzlich vorgesehen ist, können prozentual betrachtet selten vorkommende Güter ebenfalls mit vertretbarem Platzbedarf sortiert werden. Da eine längere Lagerung einzelner Güter nicht erforderlich ist, ist das Verfahren auch insgesamt rasch. Darüber hinaus sind die Stückkosten pro Gut geringer.

Um die Güter für die automatische, semiautomatische und die optional vorgesehene manuelle Sortierung aufzutrennen, kann eingangs eine Identifikationseinrichtung vorgesehen sein, welche beispielsweise mittels Bilderkennung Getränkekisten oder andere Güter der entsprechenden Sortierung zuordnet. Anschließend erfolgt eine entsprechende Zuordnung zu den einzelnen Sortieroptionen über eine Verzweigung von Transportbahnen wie Förderbändern.

Insbesondere wenn es sich bei den Gütern um Getränkekisten handelt, kann bevorzugt vorgesehen sein, dass die Güter auf eine nach unten geneigte Pufferstrecke aufgegeben werden. Die Pufferstrecke kann beispielsweise in einem Winkel von 0,1° bis 15°, insbesondere 2° bis 8°, nach unten geneigt sein. Dadurch kann die Schwerkraft ausgenützt werden und die Getränkekisten können sich zum Ende der Pufferstrecke bewegen. Hierfür ist in der Regel am Ende der Pufferstrecke ein Anschlag vorgesehen, sodass die erste Getränkekiste bei Erreichen einer Endposition auf der Pufferstrecke gehalten wird. Vorgesehen sein kann auch, dass die zumindest eine Pufferstrecke mit vorzugsweise bodenseitig angeordneten Roll- und/oder Gleitelementen ausgebildet ist, sodass die Getränkekisten bzw. allgemein Güter selbstständig in die Endposition der Pufferstrecke geführt werden. So wird erreicht, dass die Getränkekisten nach Aufgabe an einem oberen Ende einer Pufferstrecke selbstständig in jene Position gelangen, in welcher die Getränkekisten von der Einrichtung abgenommen werden können und auch der Nachschub der nächsten Getränkekisten selbstständig erfolgt.

Mit Vorteil ist vorgesehen, dass mit der zumindest einen Einrichtung beim Erreichen des vorbestimmten Befüllungsgrades die Güter im Bereich der Endposition mit einem ersten Förderelement von der zumindest einen Pufferstrecke abgezogen und durch die zumindest eine Einrichtung abtransportiert werden. Dadurch ist auch die semiautomatische Sortierung abgesehen von der manuellen Aufgabe der Güter auf die Pufferstrecke weitgehend automatisiert und damit effizient. Bewährt hat es sich diesbezüglich, insbesondere wenn eine nach unten geneigte Pufferstrecke vorgesehen ist, dass die Güter in der Endposition abgezogen werden, indem von der zumindest einen Einrichtung das erste Förderelement teleskopisch ausgefahren und durch die Pufferstrecke hindurch angehoben wird, sodass die Güter automatisch über das erste Förderelement laufen und optional ein abgezogenes Gut über ein weiteres Förderelement der Einrichtung, das an das erste Förderelement anschließt, abtransportiert wird.

Für eine effiziente semiautomatische Sortierung kann vorgesehen sein, dass die Güter nach dem Abziehen von der Pufferstrecke auf einen Querförderer aufgegeben werden. Die einzelnen Güter können dann von der Einrichtung von der Pufferstrecke abgezogen und unmittelbar danach weitertransportiert werden. Beispielsweise ist es so möglich, Getränkekisten mit dem Querförderer einem Ziel, z. B. einem Palettierroboter oder Bediener zuzuführen. Anschließend kann eine Palette für eine Versendung fertig gepackt werden.

Grundsätzlich ist es im Rahmen der Erfindung ausreichend, dass eine einzelne Pufferstrecke vorgesehen ist. Insbesondere wenn jedoch mehrere Güter verschiedener Hersteller semiautomatisch sortiert werden sollen, ist es zweckmäßig, dass die Güter auf mehrere übereinander und/oder nebeneinander angeordnete Pufferstrecken aufgegeben werden. Da die Pufferstrecken manuell beladen werden, können beispielsweise zwölf nebeneinander angeordnete Schächte mit jeweils drei Pufferstrecken (insgesamt somit 36 Pufferstrecken) vorgesehen sein, wobei alle drei Pufferstrecken in einem Schacht benutzerseitig in solchen Höhen angeordnet sind, in welcher eine Beladung der Pufferstrecke einfach erfolgen kann. Verfahrensmäßig ist es zweckmäßig, wenn auf eine Pufferstrecke nur gleiche Güter aufgegeben werden. Es ist aber auch möglich, insbesondere über eine Definition des Befüllungsgrades, auf einer Pufferstrecke nacheinander verschiedene Güter, beispielsweise Getränkekisten verschiedener Hersteller, aufzugeben. Um dem Personal den Wechsel von beispielsweise einer Sorte Getränkekisten auf die nächste auf einer Pufferstrecke zu erleichtern, kann auch eine optische Erkennungseinrichtung vorgesehen sein, welche dem Personal signalisiert, wann der erforderliche Befüllungsgrad einer Pufferstrecke mit einer bestimmten Sorte von Getränkekisten erreicht ist und die nächste Sorte aufgegeben werden kann.

Das weitere Ziel der Erfindung wird erreicht, wenn bei einer Vorrichtung der eingangs genannten Art zumindest eine Pufferstrecke vorgesehen ist, auf welche die Güter manuell aufgebbar sind, wobei die Pufferstrecke eine vorgegebene Länge aufweist, und zumindest eine Einrichtung vorgesehen ist, die bei Erreichen eines vorbestimmten Befüllungsgrades auf der Pufferstrecke die Güter automatisch von der Pufferstrecke abnimmt.

Ein mit einer erfindungsgemäßen Vorrichtung erzielter Vorteil ist darin zu sehen, dass die Vorrichtung eine effiziente sortenreine Trennung von Gütern wie Getränkekisten bei geringem Platzbedarf der Vorrichtung als solche erlaubt.

Es kann vorgesehen sein, dass zumindest eine Pufferstrecke nach unten geneigt ist. Insbesondere kann die Pufferstrecke in einem Winkel von 0,1° bis 15°, insbesondere 2° bis 8° nach unten geneigt sein. Dabei ist besonders bevorzugt vorgesehen, dass die zumindest eine Pufferstrecke mit vorzugsweise bodenseitig angeordneten Roll- und/oder Gleitelementen ausgebildet ist, sodass die Güter selbstständig in eine Endposition der Pufferstrecke gleiten, wobei in der Endposition ein Anschlag vorgesehen ist. Die Güter können dann kopfseitig bzw. an einem oberen Ende der Pufferstrecke aufgegeben werden und gelangen ohne zusätzliche Hilfsmittel wie motorbetriebene Förderbänder in eine Endposition, an welcher die Güter abgenommen werden können.

Bevorzugt ist es auch, dass die zumindest eine Einrichtung beim Erreichen des vorbestimmten Befüllungsgrades die Güter in der Endposition von der zumindest einen Pufferstrecke abzieht und mit einem ersten Förderelement abtransportiert. Dabei kann das erste Förderelement teleskopisch ausfahrbar gestaltet sein. Dies bringt den Vorteil, dass die Güter wie beispielsweise Getränkekisten bei einer geneigten Pufferstrecke vorerst selbstständig die Pufferstrecke von der Endposition beginnend nach oben hin auffüllen und bei Erreichen des vorbestimmten Befüllungsgrades das erste Förderelement der Einrichtung teleskopisch ausfahren und Getränkekiste für Getränkekiste abziehen kann. Da in der Regel auch ein Anschlag für die Güter vorgesehen ist, ist das Förderelement vorteilhafterweise gabelartig ausgebildet und zwischen Streben der Pufferstrecke anhebbar und absenkbar. Das erste Förderelement kann dann von unten unter die Pufferstrecke ausgefahren und angehoben werden, sodass beispielsweise eine erste, in der Endposition befindliche Getränkekiste mit dem Förderelement angehoben und von diesem abtransportiert wird. Aufgrund der Schwerkraft rücken die nachfolgenden Getränkekisten selbstständig nach und laufen ebenfalls über das erste Förderelement. Dabei ist es zweckmäßig, dass ein Querförderer vorgesehen ist, auf den die Güter durch die Einrichtung nach dem Abziehen von der Pufferstrecke aufgebbar sind. Somit wird ein kontinuierlicher Abzug der Güter bzw. Getränkekisten erreicht. Über den Querförderer laufen die Getränkekisten anschließend zu einem Arbeitsplatz, wo diese sortenrein gepackt werden können.

Wenngleich grundsätzlich eine einzige Pufferstrecke ausreichend ist, sind bevorzugt mehrere übereinander und/oder nebeneinander angeordnete Pufferstrecken vorgesehen. Es lässt sich dann auf geringem Platz beispielsweise eine Sortieranlage mit zwölf Sortierschächten konstruieren, wobei jeder Schacht drei übereinander angeordnete, parallel verlaufende Pufferstrecken aufweist. Insgesamt ergeben sich dann 36 Pufferstrecken für die semiautomatische Sortierung. Um die Güter von der Vielzahl von Pufferstrecken zeitgerecht abziehen zu können, können auch mehrere Einrichtungen vorgesehen sein. Für bis zu 40 Pufferstrecken ist es ausreichend, wenn zwei bis vier Einrichtungen vorgesehen sind, die parallel arbeiten können.
Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 eine Seitenansicht einer semiautomatischen Sortieranlage;
Fig. 2 eine Einrichtung zum Abziehen von Gütern von einer Pufferstrecke;
Fig. 3 eine Seitenansicht einer Einrichtung zum Abziehen von Gütern von einer Pufferstrecke;
Fig. 4 bis 7 einen Verfahrensablauf beim Abziehen von Getränkekisten von Pufferstrecken;
Fig. 8 ein Verfahrensschema.

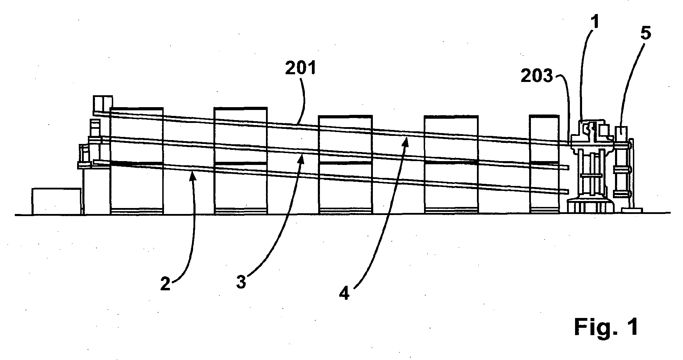

In Fig. 1 ist eine Seitenansicht einer semiautomatischen Sortieranlage dargestellt, die Bestandteil einer Vorrichtung zum Sortieren von Getränkekisten G ist. Neben der semiautomatischen Sortieranlage ist auch eine vollautomatische Sortieranlage vorgesehen, bei der keine manuelle Betätigung erforderlich ist. Zusätzlich kann auch eine weitere Einheit vorgesehen sein, in welcher ein ausschließlich manuelles Sortieren erfolgt, dies ist jedoch nicht zwingend. Der in Fig. 1 dargestellten semiautomatischen Sortieranlage wie auch der vollautomatischen Sortieranlage werden über Transportbahnen wie Förderbänder Getränkekisten G zugeführt. Hierfür werden die Getränkekisten G in einem Eingangsbereich der Vorrichtung optisch erfasst und aufgrund ihrer Zuordnung entweder der vollautomatischen oder der semiautomatischen sowie gegebenenfalls der manuellen Sortierung zugeführt. Als Erfassungs- und Erkennungssysteme kommen insbesondere Systeme infrage, welche die Getränkekisten G optisch erfassen und anhand der so ermittelten Bilder einen Vergleich mit gespeicherten Bildern vornehmen und nach Abgleich in Kombination mit einer Manövriereinheit die Kisten auf die jeweiligen Transportbahnen setzen, die zu den einzelnen Sortieranlagen führen. Eine Unterscheidung wird dabei danach getroffen, wie häufig die Artikel bzw. Getränkekisten G im Umlauf sind. Häufig vorkommende Artikel bzw. sogenannte A-Läufer werden der vollautomatisierten Sortieranlage zugeführt, wohingegen weniger häufig vorkommende Artikel bzw. Getränkekisten G der semiautomatischen Sortieranlage, die in Fig. 1 dargestellt ist, zugeführt werden. Noch seltener vorkommende Artikel können wie erwähnt manuell sortiert werden. Mit der Zuordnung der einzelnen Getränkekisten G, die üblicherweise palettenweise angeliefert und dann vereinzelt werden, kann sogleich auch eine filialbezogene Abrechnung des Pfandes erfolgen, weil Anzahl und Sorte jeder Getränkekiste und deren Inhalt erfasst werden und Daten zum anliefernden Supermarkt oder einem Anlieferer vorliegen.

Wie in Fig. 1 ersichtlich ist, weist die Sortieranlage mehrere übereinander angeordnete Pufferstrecken 2, 3, 4 auf. Die einzelnen Pufferstrecken 2, 3, 4 sind höhenmäßig so voneinander beabstandet, dass übliche Getränkekisten G mit einer Höhe von maximal 40 cm problemlos aufgegeben werden können, allerdings gleichzeitig ein Platzbedarf minimiert ist. Die Pufferstrecken 2, 3, 4 sind jedoch nicht nur übereinander angeordnet. Vielmehr sind mehrere Schächte, die jeweils drei Pufferstrecken 2, 3, 4 aufweisen, nebeneinander angeordnet. Üblicherweise sind zwischen 8 und 15 Schächte nebeneinander angeordnet, sodass insgesamt 24 bis 45 Pufferstrecken 2, 3, 4 gegeben sind, je nach erwartetem Getränkekistendurchlauf und erforderlicher Pufferkapazität.

Wie in Fig. 1 ebenfalls ersichtlich ist, sind die Pufferstrecken 2, 3, 4 von links nach rechts abfallend angeordnet. Auf der linken Seite werden einzelne Getränkekisten G manuell auf die Pufferstrecken 2, 3, 4 aufgegeben. Aufgrund der geneigten Anordnung der Pufferstrecken 2, 3, 4, die in der Regel mit einem Winkel von 2° bis 8° nach unten geneigt sind, laufen die Getränkekisten G selbstständig zum Ende der Pufferstrecken 2, 3, 4, wo diese zunächst durch einen geeigneten Anschlag aufgehalten werden. Der Anschlag kann in einfacher Weise aus zwei Metallblechen gebildet sein, die von der Seite in die jeweilige Pufferstrecke 2, 3, 4 einragen. Die Pufferstrecken 2, 3, 4 sind ebenfalls in einfacher Weise aus Streben 201 aufgebaut, an denen Roll- und/oder Gleitelemente 202 gelagert sind. Durch die Roll- und/oder Gleitelemente 202 wird ein selbstständiges Bewegen der Getränkekisten G entlang der Pufferstrecken 2, 3, 4 bis hin zu einer Endposition 203 der jeweiligen Pufferstrecke 2, 3, 4 gefördert.

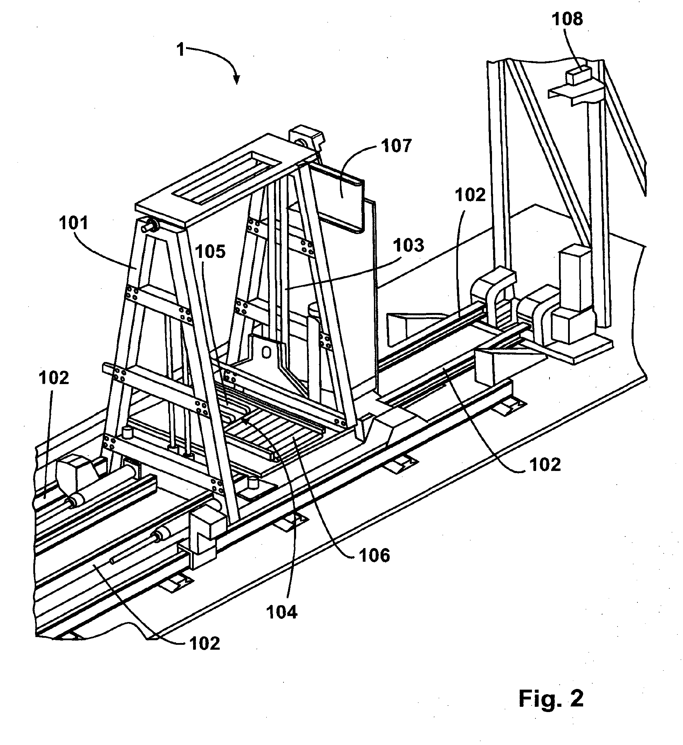

Die in Fig. 1 dargestellte Sortieranlage umfasst des Weiteren eine Einrichtung 1, mit welcher die Getränkekisten G bei Erreichen eines bestimmten Befüllungsgrades einer Pufferstrecke 2, 3, 4 automatisch abgenommen und von der Einrichtung 1 auf einen Querförderer 5 transportiert werden können. Eine Einrichtung 1 ist in Fig. 2 näher dargestellt. Die Einrichtung 1 umfasst ein Gerüst 101, das verfahrbar auf Schienen 102 gelagert ist. Um das Gerüst 101 samt den darauf angeordneten Komponenten auf den Schienen 102 rasch verfahren zu können, sind geeignete pneumatische Komponenten vorgesehen, welche eine präzise, rasche und positionsgenaue Verschiebung der Einrichtung 1 auf den Schienen 102 ermöglichen. Es versteht sich, dass insbesondere bei einer größeren Sortieranlage gemäß Fig. 1 mit einer Vielzahl paralleler Schächte mehrere Einrichtungen 1 nebeneinander auf den Schienen 102 angeordnet und auf diesen verfahrbar sein können. Am Gerüst 101 ist hierfür ein Reflektor 107 angeordnet, der mit einem Laser 108 zusammenwirkt. Durch die Messung mit dem Laser 108 kann eine Position der Einrichtung 1 auf den Schienen 102 bestimmt werden, wenngleich jede beliebige Längenmesseinrichtung infrage kommt, um die Position zu bestimmen. Des Weiteren weist die Einrichtung 1 ein erstes Förderelement 104 auf, das in Fig. 2 teilweise gezeigt und gabelartig ausgebildet ist. Das erste Förderelement 104 umfasst insbesondere zwei parallel laufende Förderbänder 105. Im Anschluss an das Förderelement 104 befindet sich ein flächiges Förderband 106.

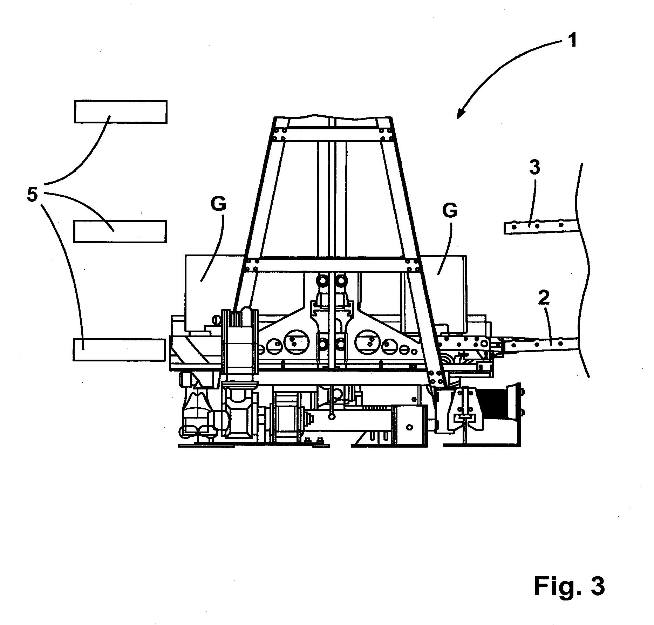

In bedeutender Weise werden die Getränkekisten G über die Förderbänder 105 und das Förderband 106 von den Pufferstrecken 2, 3, 4 abgenommen und auf den Querförderer 5 transportiert. Damit die Einrichtung 1 nicht nur verschiedene Schächte mit Pufferstrecken 2, 3, 4 anfahren kann, sondern auch die Pufferstrecken 2, 3, 4 einzeln angesteuert werden können, ist ein Zahnriemen 103 vorgesehen, mit welchem die Förderbänder höhenmäßig in eine entsprechende Position gebracht werden können, sodass auch die oberen Pufferstrecken 3, 4 angefahren werden können bzw. eine Übergabe an den Querförderer 5 in verschiedenen Höhen möglich ist (Fig. 3). Hinsichtlich der Pufferstrecken 2 braucht die Einrichtung 1 nur auf den Schienen 102 verfahren zu werden.

Eine Einrichtung 1, die für eine Sortieranlage gemäß Fig. 1 geeignet ist, weist somit ein auf Schienen 102 verfahrbares Gerüst sowie zumindest ein Förderelement 104 auf, das mit einem Antrieb höhenmäßig verstellbar ist.

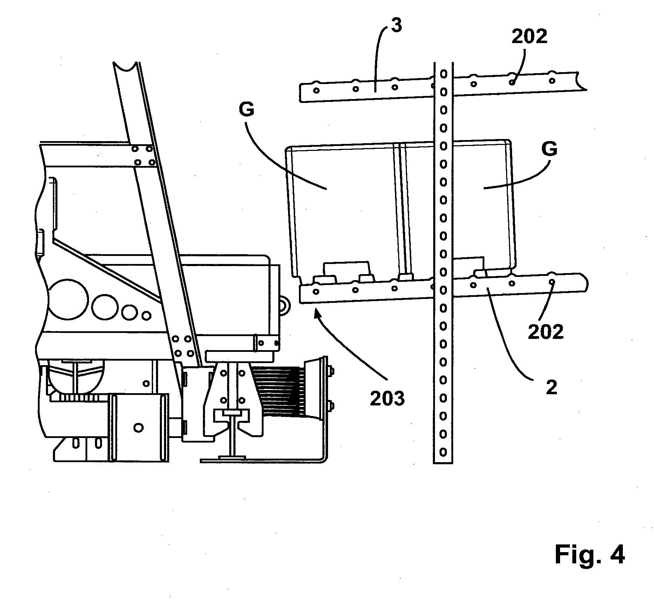

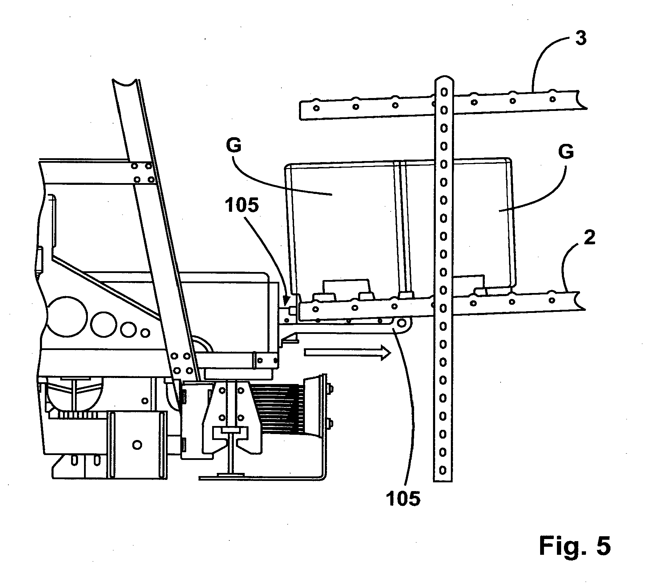

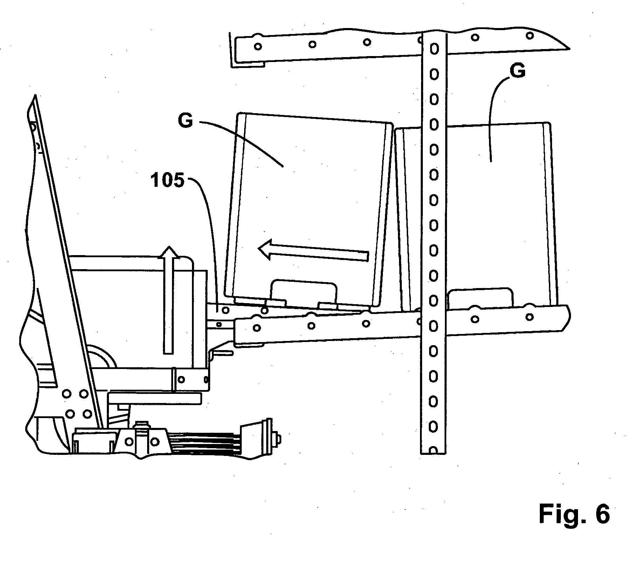

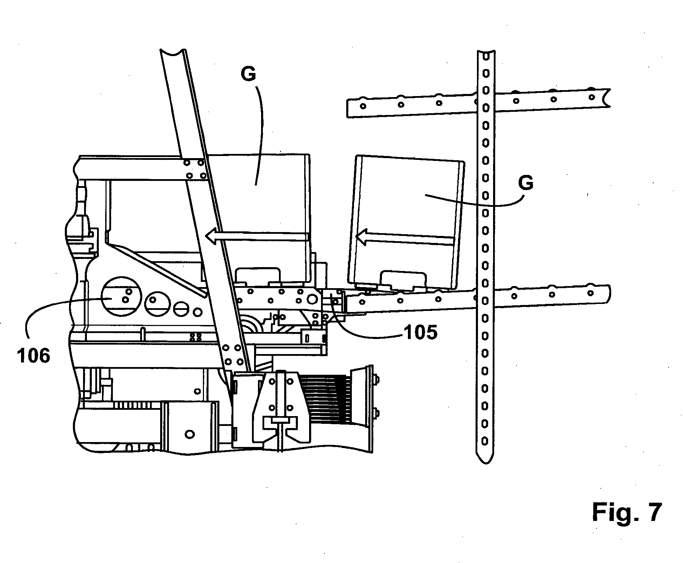

Anhand der Fig. 4 bis 7 ist die Operationsweise der Einrichtung 1 im Zusammenspiel mit der Sortieranlage gemäß Fig. 1 ausschnittsweise näher dargestellt. Exemplarisch sind bloß zwei Getränkekisten G dargestellt, wenngleich im Einsatz eine zu entladende Pufferstrecke 2, 3, 4 eine deutlich größere Anzahl von Getränkekisten G aufweist. Bei Erreichen eines bestimmten Befüllungsgrades (z. B. Anzahl der zur Beladung einer Palette erforderlichen Getränkekisten G) wird die Einrichtung 1 zunächst mit einem elektrischen Motor zu jenem Schacht gefahren, welcher die zu entladende Pufferstrecke 2, 3, 4 umfasst. Für die unterste Pufferstrecke, die gemäß Fig. 4 bis 7 zu entladen ist, reicht das bloße Verfahren der Einrichtung 1 zu einem Schacht aus. Sofern höher gelegene Pufferstrecken 3, 4 zu entladen sind, wird über eine vorgesehene Antriebseinheit wie einen Zahnriemen 103 das erste Förderelement 4 samt anschließendem Förderband 106 in eine höhenmäßig geeignete Position vor der Endposition 203 der jeweiligen Pufferstrecke 3, 4 gebracht. In dieser Situation, die in Fig. 4 dargestellt ist, ist die Einrichtung 1 zum Abziehen der Getränkekisten G bereit, die Getränkekisten G sind jedoch noch durch einen Anschlag in der Endposition 203 der Pufferstrecke 2, 3, 4 gehalten. Anschließend fährt gemäß Fig. 5 das gabelartige Förderelement 104 mit den Förderbändern 105 so aus, dass dieses unterhalb der Pufferstrecke zu liegen kommt. Anschließend wird das erste Förderelement 104 gemäß Fig. 6 angehoben und bildet dann mit dem nachgeordneten Förderband 106 eine Ebene. Damit die erste abzunehmende Getränkekiste G mit dem Förderelement 104 in Kontakt treten kann, sind in der Endposition 203 der Pufferstrecken 2, 3, 4 keine Gleitelemente mehr vorgesehen oder solche, die nur soweit in die Pufferstrecke 2, 3, 4 einragen, dass das gabelartige Förderelement 104 problemlos anhebbar ist bzw. zwischen den Roll- und/oder Gleitelementen 202 hindurch angehoben werden kann. Aus dem gleichen Grund sind die seitlichen Anschläge, welche die erste Getränkekiste G in der Endposition 203 halten, bloß teilweise in die Pufferstrecken 2, 3, 4 einragend ausgebildet. Mit dem Anheben des ersten Förderelementes 104, dessen Förderbänder 105 im Einsatz umlaufen, wird die erste Getränkekiste G über den Anschlag gehoben und abgezogen, wie dies in Fig. 6 ersichtlich ist. Die erste Getränkekiste G gelangt anschließend auf das flächige Förderband 106, von dem die Getränkekiste G dem Querförderer 5 übergeben wird. Gleichzeitig rückt gemäß Fig. 7 die nächste Getränkekiste G auf das erste Förderelement 104 selbstständig nach, und zwar aufgrund der Schwerkraft bzw. eines Druckes dahinterliegender Getränkekisten G, wie dies in Fig. 7 exemplarisch dargestellt ist. Sobald die erforderliche Anzahl von Getränkekisten G abgenommen ist, wird das erste Förderelement 104 abgesenkt, sodass noch nicht geförderte Getränkekisten G wiederum am vorgesehenen Anschlag zur Anlage kommen. Die Einrichtung 1 kann dann zur nächsten Pufferstrecke 2, 3, 4 verfahren werden, die zu entladen ist.

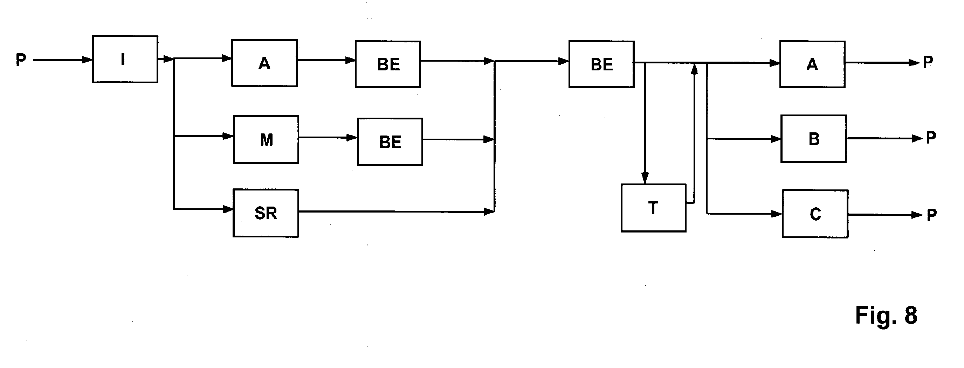

In Fig. 8 ist ein erfindungsgemäßes Verfahren schematisch näher dargestellt. Einzelne Paletten P kommen an einem sogenannten I-Punkt an, und werden danach auf manuelle Weise M oder automatisierte Weise A vereinzelt. Anschließend erfolgt eine Bilderkennung BE, wodurch eine filialbezogene Abrechnung des Pfandes erfolgen kann. Sofern sortenreine Getränkekisten SR angeliefert werden, können diese parallel verarbeitet werden, wobei jedoch die Bilderkennung BE nicht erforderlich ist.

Nach einer weiteren Bilderkennung BE kann gegebenenfalls eine Tiefensortierung T vorgesehen sein, was jedoch nicht zwingend ist. Bei der Tiefensortierung T werden die Flaschen sortiert, die in den sortenreinen Gebinden bzw. Kisten vorliegen. Am Ende der Tiefensortierung sind dann nunmehr Getränkekisten G gegeben, die von einem einzigen Hersteller stammen und in denen nunmehr Flaschen exakt jenes Herstellers vorhanden sind. Anschließend werden die Getränkekisten G nach einem vorgegebenen Kriterium, insbesondere deren Häufigkeit, verschiedenen Sortierstrecken A, B, C zugeführt. Auf der Sortierstrecke A sortiert eine vollautomatisierte Sortierung. Auf der Sortierstrecke B erfolgt eine semiautomatisierte Schachtsortierung wie für Fig. 1 bis 7 beschrieben. Auf der Sortierstrecke C wird ausschließlich manuell sortiert. Die auf den Sortierstrecken A, B, C sortierten Artikel können anschließend verpackt und an die einzelnen Hersteller versendet werden.

## Patentansprüche

1. Verfahren zur Sortierung von Gütern, insbesondere Getränkekisten (G), wobei zu sortierende Güter teilweise automatisch und teilweise semiautomatisch sowie optional manuell sortiert werden und wobei eine Zuordnung der Güter zu einer bestimmten Sortierung nach einem Kriterium wie deren Häufigkeit durchgeführt wird, **dadurch gekennzeichnet, dass** bei der semiautomatischen Sortierung die Güter manuell auf zumindest eine Pufferstrecke (2, 3, 4) aufgegeben werden, die eine vorgegebene Länge aufweist, und bei Erreichen eines vorbestimmten Befüllungsgrades die Güter mit zumindest einer Einrichtung (1) automatisch von der Pufferstrecke (2, 3, 4) abgenommen werden.

2. Verfahren nach Anspruch 1, **dadurch gekennzeichnet, dass** die Güter auf eine nach unten geneigte Pufferstrecke (2, 3, 4) aufgegeben werden.

3. Verfahren nach Anspruch 1 oder 2, **dadurch gekennzeichnet, dass** die Güter auf eine in einem Winkel von 0,1° bis 15°, insbesondere 2° bis 8°, nach unten geneigte Pufferstrecke (2, 3, 4) aufgegeben werden.

4. Verfahren nach Anspruch 2 oder 3, **dadurch gekennzeichnet, dass** die zumindest eine Pufferstrecke (2, 3, 4) mit vorzugsweise bodenseitig angeordneten Roll- und/oder Gleitelementen (202) ausgebildet ist, sodass die Güter selbstständig in eine Endposition (203) der Pufferstrecke (2, 3, 4) geführt werden.

5. Verfahren nach einem der Ansprüche 1 bis 4, **dadurch gekennzeichnet, dass** mit der zumindest einen Einrichtung (1) beim Erreichen des vorbestimmten Befüllungsgrades die Güter im Bereich der Endposition (203) mit einem ersten Förderelement (104) von der zumindest einen Pufferstrecke (2, 3, 4) abgezogen und durch die zumindest eine Einrichtung (1) abtransportiert werden.

6. Verfahren nach Anspruch 5, **dadurch gekennzeichnet, dass** die Güter in der Endposition (203) abgezogen werden, indem von der zumindest einen Einrichtung (1) das erste Förderelement (104) teleskopisch ausgefahren und durch die Pufferstrecke hindurch (2, 3, 4) angehoben wird, sodass die Güter automatisch über das erste Förderelement (104) laufen und optional ein abgezogenes Gut über ein weiteres zweites Förderelement (105) der Einrichtung (1), das an das erste Förderelement (104) anschließt, abtransportiert wird.

7. Verfahren nach einem der Ansprüche 1 bis 6, **dadurch gekennzeichnet, dass** die Güter nach dem Abziehen von der Pufferstrecke (2, 3, 4) auf einen Querförderer (5) aufgegeben werden.

8. Verfahren nach einem der Ansprüche 1 bis 7, **dadurch gekennzeichnet, dass** die Güter auf mehrere übereinander und/oder nebeneinander angeordnete Pufferstrecken (2, 3, 4) aufgegeben werden.

9. Verfahren nach einem der Ansprüche 1 bis 8, **dadurch gekennzeichnet, dass** auf eine Pufferstrecke (2, 3, 4) nur gleiche Güter aufgegeben werden.

10. Vorrichtung zur Sortierung von Gütern, insbesondere teilautomatisierte Leergutsortieranlage für Getränkekisten (G), wobei zu sortierende Güter teilweise automatisch und teilweise semiautomatisch sowie optional manuell sortierbar sind und wobei eine Zuordnung der Güter zu einer bestimmten Sortierung nach einem Kriterium wie deren Häufigkeit erfolgt, **dadurch gekennzeichnet, dass** zumindest eine Pufferstrecke (2, 3, 4) vorgesehen ist, auf welche die Güter manuell aufgebbar sind, wobei die Pufferstrecke (2, 3, 4) eine vorgegebene Länge aufweist, und zumindest eine Einrichtung (1) vorgesehen ist, die bei Erreichen eines vorbestimmten Befüllungsgrades auf der Pufferstrecke (2, 3, 4) die Güter automatisch von der Pufferstrecke (2, 3, 4) abnimmt.

11. Vorrichtung nach Anspruch 10, **dadurch gekennzeichnet, dass** die zumindest eine Pufferstrecke (2, 3, 4) nach unten geneigt ist.

12. Vorrichtung nach Anspruch 10 oder 11, **dadurch gekennzeichnet, dass** die Pufferstrecke (2, 3, 4) in einem Winkel von 0,1° bis 15°, insbesondere 2° bis 8°, nach unten geneigt ist.

13. Vorrichtung nach einem der Ansprüche 10 bis 12, **dadurch gekennzeichnet, dass** die zumindest eine Pufferstrecke (2, 3, 4) mit vorzugsweise bodenseitig angeordneten Roll- und/oder Gleitelementen (202) ausgebildet ist, sodass die Güter selbstständig in eine Endposition (203) der Pufferstrecke (2, 3, 4) gleiten, wobei in der Endposition (203) ein Anschlag vorgesehen ist.

14. Vorrichtung nach einem der Ansprüche 10 bis 13, **dadurch gekennzeichnet, dass** die zumindest eine Einrichtung (1) beim Erreichen des vorbestimmten Befüllungsgrades die Güter in der Endposition (203) von der zumindest einen Pufferstrecke (2, 3, 4) abzieht und mit einem ersten Förderelement (104) abtransportiert.

15. Vorrichtung nach Anspruch 14, **dadurch gekennzeichnet, dass** das erste Förderelement (104) teleskopisch ausfahrbar ist.

16. Vorrichtung nach Anspruch 15, **dadurch gekennzeichnet, dass** das erste Förderelement (104) gabelartig ausgebildet und zwischen Streben (201) der Pufferstrecke (2, 3, 4) anhebbar und absenkbar ist.

17. Vorrichtung nach einem der Ansprüche 10 bis 16, **dadurch gekennzeichnet, dass** ein Querförderer (5) vorgesehen ist, auf den die Güter durch die Einrichtung (1) nach dem Abziehen von der Pufferstrecke (2, 3, 4) aufgebbar sind.

18. Vorrichtung nach einem der Ansprüche 10 bis 17, **dadurch gekennzeichnet, dass** mehrere übereinander und/oder nebeneinander angeordnete Pufferstrecken (2, 3, 4) vorgesehen sind.

## Claims

1. A method for the sorting of goods, in particular drinks crates (G), wherein goods to be sorted are sorted partially automatically and partially semi-automatically as well as optionally manually, and wherein the goods are associated with a certain sort order according to a criterion such as their frequency, **characterised in that** in case of a semi-automatic sort order the goods are placed manually onto at least one buffer section (2, 3, 4) comprising a specified length, and on reaching a predetermined filling level, the goods are automatically withdrawn with at least one unit (1) from the buffer section (2, 3, 4).

2. The method according to claim 1, **characterised in that** the goods are placed onto a downwardly inclined buffer section (2, 3, 4).

3. The method according to claim 1 or 2, **characterised in that** the goods are placed onto a buffer section (2, 3, 4) which is downwardly inclined at an angle between 0.1° and 15°, in particular between 2° and 8°.

4. The method according to claim 2 or 3, **characterised in that** the at least one buffer section (2, 3, 4) is equipped with rolling and/or gliding elements (202) preferably arranged on the bottom, so that the goods are automatically guided into an end position (203) of the buffer section (2, 3, 4).

5. The method according to one of claims 1 to 4, **characterised in that**, with the aid of the at least one unit (1), as the predetermined filling level is reached, the goods are withdrawn in the area of the end position (203) from the at least one buffer section (2, 3, 4) with a first conveying element (104) and transported away by the at least one unit (1).

6. The method according to claim 5, **characterised in that** the goods are withdrawn in the end position (203), **in that** the first conveying element (104) is telescopically extended by the at least one unit (1) and raised right through the buffer section (2, 3, 4) so that the goods automatically move over the first conveying element (104) and a withdrawn goods item is optionally transported away via a further second conveying element (105) of the unit (1), which follows onto the first conveying element (104).

7. The method according to one of claims 1 to 6, **characterised in that** the goods, following withdrawal from the buffer section (2, 3, 4), are placed onto a transverse conveyor (5).

8. The method according to one of claims 1 to 7, **characterised in that** the goods are placed onto several buffer sections (2, 3, 4) arranged one above the other and/or adjacent to one another.

9. The method according to one of claims 1 to 8, **characterised in that** only identical goods are placed onto one buffer section (2, 3, 4).

10. A device for the sorting of goods, in particular a partly automated empties sorting system for drinks crates (G), wherein goods to be sorted can be sorted partially automatically and partially semi-automatically as well as optionally manually and wherein the goods are associated with a certain sort order according to a criterion such as their frequency, **characterised in that** at least one buffer section (2, 3, 4) is provided onto which the goods can be placed manually, wherein the buffer section (2, 3, 4) comprises a specified length, and at least one unit (1) is provided which on reaching a predetermined filling level on the buffer section (2, 3, 4) automatically withdraws the goods from the buffer section (2, 3, 4).

11. The device according to claim 10, **characterised in that** the at least one buffer section (2, 3, 4) is downwardly inclined.

12. The device according to claim 10 or 11, **characterised in that** the buffer section (2, 3, 4) is downwardly inclined at an angle between 0.1° and 15°, in particular between 2° and 8°.

13. The device according to one of claims 10 to 12, **characterised in that** the at least one buffer section (2, 3, 4) is equipped with rolling and/or gliding elements (202) preferably arranged on the bottom, so that the goods automatically glide into an end position (203) of the buffer section (2, 3, 4), wherein a stop is provided in the end position (203).

14. The device according to one of claims 10 to 13, **characterised in that** the at least one unit (1), on reaching the predetermined filling level, withdraws the goods in the end position (203) from the at least one buffer section (2, 3, 4) and transports them away with a first conveying element (104).

15. The device according to claim 14, **characterised in that** the first conveying element (104) is telescopically extendable.

16. The device according to claim 15, **characterised in that** the first conveying element (104) is shaped in the manner of a fork and can be raised and lowered between struts (201) of the buffer section (2, 3, 4).

17. The device according to one of claims 10 to 16, **characterised in that** a transverse conveyor (5) is provided, onto which the goods can be placed by the unit (1) after being withdrawn from the buffer section (2, 3, 4).

18. The device according to one of claims 10 to 17, **characterised in that** several buffer sections (2, 3, 4) are provided which are arranged one above the other or adjacent to one another.

## Revendications

1. Procédé destiné à trier des produits, notamment des caisses à boissons (G), des produits à trier étant triés en partie de manière automatique et en partie de manière semi-automatique, ainsi qu'en option de manière manuelle et une affectation des produits à un tri défini étant réalisée selon un critère, comme sa fréquence, **caractérisé en ce que** lors du tri semi-automatique, les produits sont distribués manuellement sur au moins un trajet tampon (2, 3, 4) qui présente une longueur prédéfinie et à l'atteinte d'un taux de remplissage prédéfini, les produits sont repris automatiquement du trajet tampon (2, 3, 4) par au moins un dispositif (1).

2. Procédé selon la revendication 1, **caractérisé en ce que** les produits sont distribués sur un trajet tampon (2, 3, 4) incliné vers le bas.

3. Procédé selon la revendication 1 ou 2, **caractérisé en ce que** les produits sont distribués sur un trajet tampon (2, 3, 4) incliné vers le bas sous un angle de 0,1° à 15°, notamment de 2° à 8°.

4. Procédé selon la revendication 2 ou 3, **caractérisé en ce que** l'au moins un trajet tampon (2, 3, 4) est conçu avec des éléments de roulement et/ou de glissement (202) placés de préférence sur le fond inférieur, de sorte que les produits sont guidés automatiquement dans une position finale (203) du trajet tampon (2, 3, 4).

5. Procédé selon l'une quelconque des revendications 1 à 4, **caractérisé en ce qu'**avec l'au moins un dispositif (1), à l'atteinte du taux de remplissage prédéfini, les produits sont retirés dans la zone de la position finale (203) avec un premier élément de transport (104) de l'au moins un trajet tampon (2, 3, 4) et évacués par l'au moins un dispositif (1).

6. Procédé selon la revendication 5, **caractérisé en ce que** les produits sont retirés dans la position finale (203) **en ce que** par l'au moins un dispositif (1), le premier élément de transport (104) de déploie de manière télescopique et se relève à travers le trajet tampon (2, 3, 4), de sorte que les produits circulent automatiquement par l'intermédiaire du premier élément de transport (104) en qu'en option, un produit retiré soit évacué par l'intermédiaire d'un deuxième élément de transport (105) du dispositif (1) qui se raccorde sur le premier élément de transport (104).

7. Procédé selon l'une quelconque des revendications 1 à 6, **caractérisé en ce qu'**après le retrait du trajet tampon (2, 3, 4), les produits sont distribués sur un convoyeur transversal (5).

8. Procédé selon l'une quelconque des revendications 1 à 7, **caractérisé en ce que** les produis sont distribués sur plusieurs trajets tampons (2, 3, 4) placés les uns au-dessus des autres ou les uns à côté des autres.

9. Procédé selon l'une quelconque des revendications 1 à 8, **caractérisé en ce que** seuls des produits identiques sont distribués sur un trajet tampon (2, 3, 4).

10. Dispositif destiné à trier des produits, notamment installation de tri de produits vides pour des caisses à boissons (G), des produits à trier pouvant être triés en partie de manière automatique et en partie de manière semi-automatique, ainsi qu'en option de manière manuelle et une affectation des produits à un tri défini s'effectuant selon un critère, comme leur fréquence, **caractérisé en ce qu'**il est prévu au moins un trajet tampon (2, 3, 4) sur lequel les produits peuvent être distribués manuellement, le trajet tampon (2, 3, 4) présentant une longueur prédéfinie et **en ce qu'**il est prévu au moins un dispositif (1) qui à l'atteinte d'un certain taux de remplissage sur le trajet tampon (2, 3, 4) reprend automatiquement les produits du trajet tampon (2, 3, 4).

11. Dispositif selon la revendication 10, **caractérisé en ce que** l'au moins un trajet tampon (2, 3, 4) est incliné vers le bas.

12. Dispositif selon la revendication 10 ou 11, **caractérisé en ce que** le trajet tampon (2, 3, 4) est incliné vers le bas sous un angle de 0,1° à 15°, notamment de 2° à 8°.

13. Dispositif selon l'une quelconque des revendications 10 à 12, **caractérisé en ce que** l'au moins un trajet tampon (2, 3, 4) est conçu avec des éléments de roulement et/ou de glissement (202) placés de préférence sur le fond inférieur, de sorte que les produits glissent automatiquement dans une position finale (203) du trajet tampon (2, 3, 4), une butée étant prévue dans la position finale (203).

14. Dispositif selon l'une quelconque des revendications 10 à 13, **caractérisé en ce qu'**à l'atteinte du taux de remplissage prédéfini, l'au moins un dispositif (1) retire les produits dans la position finale (203) de l'au moins un trajet tampon (2, 3, 4) et les évacue avec un premier élément de transport (104).

15. Dispositif selon la revendication 14, **caractérisé en ce que** le premier élément de transport (104) est déployable de manière télescopique.

16. Dispositif selon la revendication 15, **caractérisé en ce que** le premier élément de transport (104) est conçu en forme de fourche et est relevable et abaissable entre des montants (201) du trajet tampon (2, 3, 4).

17. Dispositif selon l'une quelconque des revendications 10 à 16, **caractérisé en ce qu'**il est prévu un convoyeur transversal (5), sur lequel les produits peuvent être distribués par le dispositif (1) après le retrait du trajet tampon (2, 3, 4).

18. Dispositif selon l'une quelconque des revendications 10 à 17, **caractérisé en ce que** plusieurs trajets tampons (2, 3, 4) placés les uns au-dessus des autres ou les uns à côté des autres sont prévus.
